**Europäisches Patentamt**

**European Patent Office**

**Office européen des brevets**

(19)

(11) Veröffentlichungsnummer: **0 045 734**
**B1**

# (12) EUROPÄISCHE PATENTSCHRIFT

(45) Veröffentlichungstag der Patentschrift:
28.09.83

(21) Anmeldenummer: 81890108.4

(22) Anmeldetag: 30.06.81

(51) Int. Cl.³: **B 29 B 5/04**, B 29 B 1/06,
B 29 F 3/01, B 29 C 29/00

(54) Vorrichtung zum Aufbereiten von thermoplastischem Kunststoffgut.

(30) Priorität: 31.07.80 AT 3961/80

(43) Veröffentlichungstag der Anmeldung:
10.02.82 Patentblatt 82/6

(45) Bekanntmachung des Hinweises auf die Patenterteilung:
28.09.83 Patentblatt 83/39

(84) Benannte Vertragsstaaten:
CH DE FR GB IT LI NL

(56) Entgegenhaltungen:
AT-B-354 076
DE-A-2 043 836
DE-A-2 409 986
US-A-4 139 309

(73) Patentinhaber: **Österreichische Schiffswerften
Aktiengesellschaft Linz-Korneuburg, Hafenstrasse 61,
A-4010 Linz (AT)**

(72) Erfinder: **Schulz, Helmuth, Enzing 19, A-4490 St.Florian
(AT)**
Erfinder: **Bacher, Helmut, Industriezeile 2, A-4020 Linz
(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

# Vorrichtung zum Aufbereiten von thermoplastischem Kunststoffgut

Die Erfindung bezieht sich auf eine Vorrichtung zum Aufbereiten von thermoplastischem Kunststoffgut, bestehend aus einem Aufnahmebehälter mit vertikaler Achse, einem im Aufnahmebehälter in Bodennähe angeordneten, um die Behälterachse drehenden Zerkleinerungs- und Mischwerkzeug und aus wenigstens einem Schneckenextruder, der durch eine Öffnung im Mantel des Aufnahmebehälters im Bereich des Zerkleinerungs- und Mischwerkzeugs in den Aufnahmebehälter ragt. Eine solche Vorrichtung ist z. B. aus der österreichischen Patentschrift AT-B-354 076 bekannt.

Das von oben in den Aufnahmebehälter derartiger Vorrichtungen eingebrachte Kunststoffgut wird von dem Zerkleinerungs- und Mischwerkzeug im Bodenbereich des Aufnahmebehälters erfaßt, zerkleinert und gut durchgemischt, wobei eine Erwärmung des Gutes stattfindet. Die Gutteile werden durch das Zerkleinerungs- und Mischwerkzeug einerseits um die vertikale Achse des Aufnahmebehälters entlang des Behältermantels bewegt und anderseits einer Umwälzbewegung in Radialebenen unterworfen, so daß neben einem guten Mischeffekt auch ein günstiger thermischer Wirkungsgrad sichergestellt werden kann. Das in dieser Weise erwärmte Kunststoffgut soll nun an den Schneckenextruder gleichmäßig abgegeben werden, der tangential zum Aufnahmebehälter angeordnet ist und mit diesem durch eine Mantelöffnung in Verbindung steht. Da das Auffüllen bzw. Stopfen des Schneckenextruders durch die auf die Gutteilchen wirkenden Fliehkräfte bewirkt wird, besteht bei dieser bekannten Vorrichtung die Gefahr, daß der Schneckenextruder ungleichmäßig aufgefüllt wird, wobei sich auch ein ändernder Füllstand des Aufnahmebehälters bemerkbar macht.

Der Erfindung liegt demnach die Aufgabe zugrunde, diese Mängel zu vermeiden und eine Vorrichtung zum Aufbereiten von thermoplastischem Kunststoffgut so zu verbessern, daß der Schneckenextruder weitgehend unabhängig vom Füllstand des Aufnahmebehälters gleichmäßig aufgefüllt bzw. gestopft werden kann. Außerdem soll der thermische Wirkungsgrad noch verbessert werden.

Die Erfindung löst die gestellte Aufgabe dadurch, daß der Schneckenextruder zumindest angenähert radial zur Behälterachse angeordnet ist und mit seinem in den Aufnahmebehälter ragenden Ende mit axialem Abstand oberhalb des Zerkleinerungs- und Mischwerkzeuges liegt.

Da zufolge dieser Maßnahme der Schneckenextruder mit seinem in den Aufnahmebehälter ragenden Ende in den Gutstrom hineinreicht, werden die Gutteilchen der Extruderschnecke zwangsläufig zugeführt, wobei der Befüllungsdruck für die Schnecke nicht von den auftretenden Fliehkräften, sondern von den Förderkräften abhängt, die vom Zerkleinerungs- und Mischwerkzeug in Umlaufrichtung auf den Gutstrom ausgeübt werden. Das Auffüllen und Stopfen der Extruderschnecke erfolgt daher auch weitgehend unabhängig vom Füllstand des Aufnahmebehälters, weil nur dafür gesorgt werden muß, daß die Füllöffnung für den Schneckenextruder innerhalb des umlaufenden Gutstromes liegt. Bedingt durch den höheren Befüllungsdruck für den Schneckenextruder stellt sich ein höherer thermischer Wirkungsgrad ein.

Um zu verhindern, daß gegen den Schneckenextruder bewegte Gutteilchen ausweichen können, kann in weiterer Ausbildung der Erfindung auf der Mantelinnenseite des Aufnahmebehälters in Drehrichtung des Zerkleinerungs- und Mischwerkzeuges vor dem in den Aufnahmebehälter ragenden Extruderende eine gegen das Extruderende abfallende Leitwand für das Kunststoffgut vorgesehen werden. Diese Leitwand führt die Gutteilchen in ihrem Bereich zwangsweise gegen das Aufnahmeende des Extruders, wobei sich eine zusätzliche Verdichtung des Kunststoffgutes ergibt. Wenn das Ausweichen von Gutteilchen auf Grund der Gewichtsbelastung durch die darüberliegenden Gutschichten vom Füllstand des Aufnahmebehälters abhängig ist, so kann diese Abhängigkeit durch das Vorsehen einer entsprechenden Leitwand vermieden werden. Die Befüllung der Extruderschnecke ist in einem solchen Fall nur mehr von dem Förderdruck des Zerkleinerungs- und Mischwerkzeuges auf das Fördergut in Umfangsrichtung abhängig, was sich nicht nur auf den thermischen Wirkungsgrad, sondern auch auf den gleichmäßigen Gutdurchsatz vorteilhaft auswirkt.

Der der Schnecke des Extruders zugeführte Gutstrom hängt vom axialen Abstand der Leitwand vom Zerkleinerungs- und Mischwerkzeug ab. Über diesen Abstand kann folglich auch der dem Schneckenextruder zuzufördernde Gutstrom gesteuert werden. Zu diesem Zweck kann das Zerkleinerungs- und Mischwerkzeug axial verstellbar gelagert sein.

Damit der sich durch das Vorsehen der Leitwand ergebende Staudruck auf den Gutstrom nicht wegen der dadurch bedingten höheren Guttemperatur zu einem Anhaften des Kunststoffgutes an der Leitwand führen kann, kann die Leitwand vorzugsweise gekühlt werden, wie dies für den Aufnahmebehälter bekannt ist.

In der Zeichnung ist der Erfindungsgegenstand in einem Ausführungsbeispiel vereinfacht dargestellt. Es zeigt

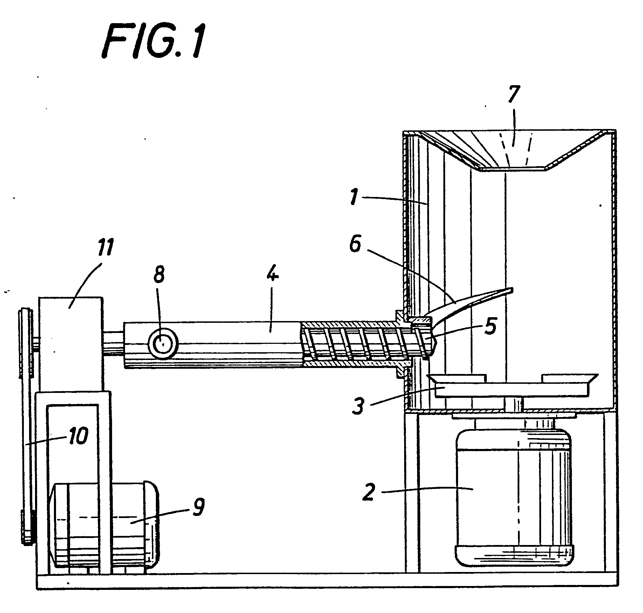

Fig. 1 eine erfindungsgemäße Vorrichtung zum Aufbereiten von thermoplastischem Kunststoff im Vertikalschnitt entlang der Extruderachse,

Fig. 2 diese Vorrichtung im Vertikalschnitt normal zur Extruderachse und

Fig. 3 die Vorrichtung im Horizontalschnitt.

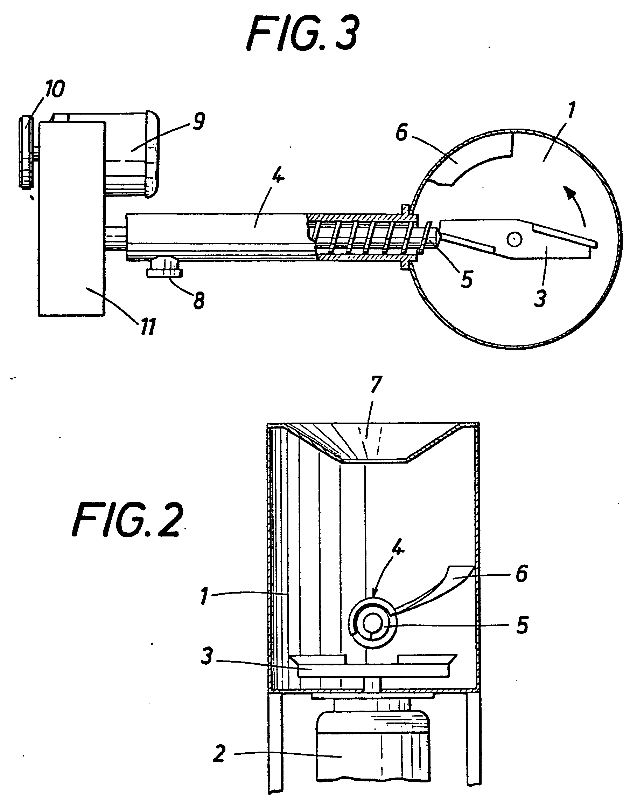

Die dargestellte Vorrichtung besteht im wesentlichen aus einem Aufnahmebehälter 1, in dessen Bodennähe ein über einen Motor 2 antreibbares, um die Behälterachse drehbar gelagertes Zerkleinerungs- und Mischwerkzeug 3 vorgesehen ist. Mit axialem Abstand oberhalb dieses Zerkleinerungs- und Mischwerkzeuges 3 ragt ein Schneckenextruder 4 mit seinem Aufnahmeende 5 in den Aufnahmebehälter 1, wobei die Schneckenachse radial zur Behälterachse verläuft, wie dies insbesondere der Fig. 3 entnommen werden kann.

Auf der Mantelinnenseite des Aufnahmebehälters 1 ist in Drehrichtung des Zerkleinerungs- und Mischwerkzeuges 3 vor dem Extruderende 5 eine gegen das Extruderende 5 abfallende Leitwand 6 für das Kunststoffgut vorgesehen. Diese Leitwand kann ähnlich dem Aufnahmebehälter gekühlt werden, indem entsprechende Kanäle für ein Kühlwasser vorgesehen werden.

Das aufzubereitende thermoplastische Kunststoffgut wird über einen Fülltrichter 7 von oben in den Aufnahmebehälter 1 eingebracht und gelangt in den Wirkungsbereich des Zerkleinerungs- und Mischwerkzeuges, wodurch das Gut unter gleichzeitiger Zerkleinerung und Mischung entlang des Behältermantels im Kreis geführt wird. Zusätzlich zu dieser Umlaufbewegung erfahren die Gutteilchen eine Umwälzbewegung in radialen Ebenen. Die Gutteilchen werden zufolge der Umlaufbewegung um die Behälterachse gegen den Behältermantel gedrückt und gelangen in den Bereich der Leitwand 6, von der sie zwangsläufig gegen das Aufnahmeende 5 des Schneckenextruders geführt werden. Der in den Gutstrom ragende Extruder wird auf Grund dieser Anordnung mit einem erhöhten Druck befüllt und schneidet mit seiner Schnecke die zwischen die Schneckengänge gedrückten Gutteilchen aus dem Materialstrom heraus, so daß für eine gleichmäßige und gute Befüllung des Schneckenextruders 4 unabhängig von der Füllhöhe des Aufnahmebehälters 1 gesorgt ist. Durch die Leitwand 6 wird eine Art Stauraum vor dem Aufnahmeende 5 des Schneckenextruders geschaffen, welcher Stauraum für einen gleichmäßigen Befüllungsdruck für den Schneckenextruder verantwortlich ist. Der Staudruck kann durch eine axiale Verstellung des Zerkleinerungs- und Mischungswerkzeuges 3 an unterschiedliche Kunststoffzusammensetzungen angepaßt werden.

Das im Extruder 4 plastifizierte Gut kann über eine entsprechende Austrittsöffnung 8 ausgetragen werden, wobei der austretende Schmelzstrang in an sich bekannter Weise mittels einer Siebeinrichtung schmelzfiltriert und zu beliebigen Formen extrudiert werden kann.

Zum Antrieb des Schneckenextruders ist ein Motor 9 vorgesehen, der über einen Riementrieb 10 und ein Getriebe 11 mit der Schnecke des Extruders in Verbindung steht.

**Patentansprüche**

1. Vorrichtung zum Aufbereiten von thermoplastischem Kunststoffgut, bestehend aus einem Aufnahmebehälter (1) mit vertikaler Achse, einem im Aufnahmebehälter in Bodennähe angeordneten, um die Behälterachse drehenden Zerkleinerungs- und Mischwerkzeug (3) und aus wenigstens einem Schneckenextruder (4), der durch eine Öffnung im Mantel des Aufnahmebehälters im Bereich des Zerkleinerungs- und Mischwerkzeuges in den Aufnahmebehälter ragt, dadurch gekennzeichnet, daß der Schneckenextruder (4) zumindest angenähert radial zur Behälterachse angeordnet ist und mit seinem in den Aufnahmebehälter (1) ragenden Ende (5) mit axialem Abstand oberhalb des Zerkleinerungs- und Mischwerkzeuges (3) liegt.

2. Vorrichtung nach Anspruch 1, dadurch gekennzeichnet, daß auf der Mantelinnenseite des Aufnahmebehälters (1) in Drehrichtung des Zerkleinerungs- und Mischwerkzeuges (3) vor dem in den Aufnahmebehälter (1) ragenden Extruderende (5) eine gegen das Extruderende (5) abfallende Leitwand (6) für das Kunststoffgut vorgesehen ist.

3. Vorrichtung nach Anspruch 1 und 2, dadurch gekennzeichnet, daß das Zerkleinerungs- und Mischwerkzeug (3) axial verstellbar gelagert ist.

4. Vorrichtung nach einem der Ansprüche 1 bis 3, dadurch gekennzeichnet, daß die Leitwand (6) kühlbar ist.

**Claims**

1. Apparatus for processing synthetic thermoplastic material, comprising a receiving vessel (1), having a vertical axis, a disintegrating and mixing tool (3), which is disposed in the receiving vessel and rotates about the axis of the vessel, and at least one screw extruder (4), which protrudes into the receiving vessel through an opening in the shell of the receiving vessel adjacent to the disintegrating and mixing tool, characterized in that the screw extruder (4) extends in an at least approximately radial direction with respect to the axis of the vessel and its end (5) protruding into the receiving vessel (1) is axially spaced above the disintegrating and mixing tool (3).

2. Apparatus according to claim 1, characterized in that a guide wall (6) for the plastic material is disposed on the inside of the receiving vessel (1) and slopes down toward the end (5) of the extruder and is disposed before the end (5) of the extruder in the direction of rotation of the disintegrating and mixing tool (3).

3. Apparatus according to claims 1 and 2, characterized in that the disintegrating and mixing tool (3) is axially adjustably mounted.

4. Apparatus according to any of claims 1 to 3, characterized in that the guide wall (6) is adapted to be cooled.

## Revendications

1. Dispositif pour le traitement de matières thermoplastiques, se composant d'un récipient (1) à axe vertical, d'un outil (3) de réduction et de mélange tournant autour de l'axe et disposé à proximité du fond dans le récipient, et d'au moins une extrudeuse (4) à vis-sans-fin qui pénètre à travers une ouverture ménagée dans l'enveloppe du récipient dans la zone de l'outil de réduction et de mélange dans le récipient, dispositif caractérisé par le fait que l'extrudeuse (4) à vis-sans-fin est disposée pour le moins approximativement dans le sens radial du récipient et se place, avec son extrémité (5) pénétrant dans le récipient (1), à une certaine distance axiale au-dessus de l'outil (3) de réduction et de mélange.

2. Dispositif suivant la revendication 1, caractérisé par le fait que sur le côté intérieur de l'enveloppe du récipient (1) est prévu, dans le sens de la rotation de l'outil (3) de réduction et de mélange, devant l'extrémité (5) d'extrudeuse, une cloison (6) allant en descendant vers l'extrémité (5) de l'extrudeuse et guidant la matière synthétique.

3. Dispositif suivant les revendications 1 et 2, caractérisé par le fait que l'outil (3) de réduction et de mélange est monté pour pouvoir être positionné de manière réglable dans le sens axial.

4. Dispositif suivant l'une des revendications 1 à 3, caractérisé par le fait que la cloison (6) de guidage peut être refroidie.

# FIG.1

# FIG. 3

# FIG. 2